# EUROPÄISCHE PATENTANMELDUNG

(11) **EP 2 360 410 A1**
(43) Veröffentlichungstag der Anmeldung: **24.08.2011**
(21) Anmeldenummer: 11000254.0
(22) Anmeldetag: 14.01.2011
(51) Int. Cl.: F16L 37/088

(54) **Steckverbinder**

(30) Priorität: 12.02.2010 AT 2052010
(71) Anmelder: Henn GmbH & Co.KG, 6850 Dornbirn (AT)
(72) Erfinder: Hartmann, Harald, 6850 Dornbirn (AT)
(74) Vertreter: Burger, Hannes

(57) **Zusammenfassung**

Eine Steckverbindung zum Verbinden von Leitungen für flüssige oder gasförmige Medien, umfassend einen ersten Steckverbinder (1) und einen zweiten Steckverbinder (5) mit einem axialen Durchgangskanal (7), in den der erste Steckverbinder (1) von einem einsteckseitigen Ende (8) des zweiten Steckverbinders her einsteckbar ist, und mit einer ringförmigen Dichtung (9), welche in einer von einem Boden (11), einer ersten Seitenwand (12) und einer gegenüber der ersten Seitenwand (12) weiter vom einsteckseitigen Ende (8) des zweiten Steckverbinders (5) entfernt gelegenen zweiten Seitenwand (13) begrenzten ringförmigen Dichtungsnut (10) des zweiten Steckverbinders (5) angeordnet ist und welche eine Dichtlippe (14) und eine Schmutzlippe (15) umfasst, die an ihrem freien Ende eine stirnseitige Fläche (20) besitzt. Im geschlossenen Zustand der Steckverbindung überlappt sich die radiale Erstreckung (r1-r2) der stirnseitigen Fläche (20) der Schmutzlippe (15) in Richtung der zentralen Längsachse (6) des zweiten Steckverbinders (5) gesehen mit der radialen Erstreckung (r3-r4) der ersten Seitenwand (12) der Dichtungsnut (10), wobei die Schmutzlippe (15) mit ihrer stirnseitigen Fläche (20) an der ersten Seitenwand (12) der Dichtungsnut (10) abstützbar ist.

## Beschreibung

Die Erfindung bezieht sich auf eine Steckverbindung zum Verbinden von Leitungen für flüssige oder gasförmige Medien, umfassend einen ersten Steckverbinder mit einer zentralen Längsachse und mit einem axialen Durchgangskanal und einen zweiten Steckverbinder mit einer zentralen Längsachse und mit einem axialen Durchgangskanal, in den der erste Steckverbinder von einem einsteckseitigen Ende des zweiten Steckverbinders her einsteckbar ist, und mit einer ringförmigen Dichtung, welche in einer von einem Boden, einer ersten Seitenwand und einer gegenüber der ersten Seitenwand weiter vom einsteckseitigen Ende des zweiten Steckverbinders entfernt gelegenen zweiten Seitenwand begrenzten ringförmigen Dichtungsnut des zweiten Steckverbinders angeordnet ist und welche eine Dichtlippe, die im geschlossenen Zustand der Steckverbindung an einer äußeren Oberfläche des ersten Steckverbinders anliegt und sich hierbei zu ihrem freien Ende hin vom einsteckseitigen Ende des zweiten Steckverbinders entfernt, und eine Schmutzlippe umfasst, die im geschlossenen Zustand der Steckverbindung an der äußeren Oberfläche des ersten Steckverbinders anliegt und sich hierbei zu ihrem freien Ende hin dem einsteckseitigen Ende des zweiten Steckverbinders annähert und die an ihrem freien Ende eine stirnseitige Fläche besitzt.

Derartige Steckverbindungen werden insbesondere im Automobilbereich zur Verbindung von Ladeluftleitungen und Kühlwasserleitungen eingesetzt.

Eine Steckverbindung der eingangs genannten Art geht beispielsweise aus der WO 2009/094679 A1 und der EP 2 083 205 A2 hervor. Die WO 02/14719 A1 zeigt eine weitere Dichtung mit einer Dichtlippe und einer Schmutzlippe, wobei die Dichtung hier in einer Dichtungsnut gehalten ist, die an der äußeren Oberfläche des ersten Steckverbinders angeordnet ist, der in den zweiten Steckverbinder einsteckbar ist.

Obwohl sich solche Dichtungen, die zusätzlich zu einer den abgedichteten Bereich der Steckverbindung begrenzenden Dichtlippe eine Schmutzlippe aufweisen, bewährt haben, wäre eine Erhöhung der Lebensdauer der Dichtung wünschenswert.

Aufgabe der Erfindung ist es eine Steckverbindung der eingangs genannten Art bereitzustellen, durch welche eine Erhöhung der Lebensdauer der Dichtung gelingt. Erfindungsgemäß gelingt dies durch eine Steckverbindung mit den Merkmalen des Anspruchs 1.

Bei der Steckverbindung gemäß der Erfindung kann sich im geschlossenen Zustand der Steckverbindung die Schmutzlippe der Dichtung mit ihrer stirnseitigen Fläche an der ersten Seitenwand der Dichtungsnut abstützten. Hierzu überlappt sich im geschlossenen Zustand der Steckverbindung, d.h. wenn der erste Steckverbinder und der zweite Steckverbinder vollständig zusammengesteckt sind, in Richtung der zentralen Längsachse des zweiten Steckverbinders gesehen die radiale Erstreckung der stirnseitigen Fläche der Schmutzlippe mit der radialen Erstreckung der ersten Seitenwand der Dichtungsnut.

In einer bevorzugten Ausführungsform ist der Winkel zwischen der Richtung der Längserstreckung der Schmutzlippe und der zentralen Längsachse des zweiten Steckverbinders zumindest im geschlossenen Zustand der Steckverbindung kleiner als 20°, besonders bevorzugt kleiner als 10°.

Dadurch, dass sich im geschlossenen Zustand der Steckverbindung die Schmutzlippe an der benachbarten ersten Seitenwand der Dichtungsnut in axialer Richtung des zweiten Steckverbinders abstützen kann, können die zwischen der Schmutzlippe der Dichtung und einem auf dem Boden der Dichtungsnut aufliegenden Dichtungsfuß der Dichtung wirkenden Kräfte verringert werden. Hierbei kann eine axiale Verschiebung der Schmutzlippe, welche beispielsweise durch einen im von der Dichtung abgedichteten Bereich der Steckverbindung vorliegenden Überdruck bewirkt werden kann, in die Richtung zum einsteckseitigen Ende des zweiten Steckverbinders begrenzt werden, wodurch eine Dehnung eines die Schmutzlippe mit dem Dichtungsfuß verbindenden Verbindungsstegs verringert werden kann.

Eine bevorzugte Ausführungsform der Erfindung sieht vor, dass sich in Richtung der Längsachse des zweiten Steckverbinders gesehen die stirnseitige Fläche der Schmutzlippe über mindestens 50% ihrer radialen Erstreckung mit der radialen Erstreckung der ersten Seitenwand der Dichtungsnut überlappt.

In einer vorteilhaften Ausführungsform der Erfindung besitzt die Dichtlippe an ihrem freien Ende eine stirnseitige Fläche, deren radiale Erstreckung sich im geschlossenen Zustand der Steckverbindung in Richtung der zentralen Längsachse des zweiten Steckverbinders gesehen mit der radialen Erstreckung der zweiten Seitenwand der Dichtungsnut überlappt, sodass sich die Dichtlippe mit ihrer stirnseitigen Fläche an der zweiten Seitenwand der Dichtungsnut abstützen kann.

Dadurch, dass sich die Dichtlippe bei einer Verschiebung der Dichtlippe in die vom einsteckseitigen Ende des zweiten Steckverbinders weggerichtete Richtung an der zweiten Seitenwand der Dichtungsnut abstützen kann, kann die Belastung auf einen die Dichtlippe mit dem Dichtungsfuß verbindenden Verbindungssteg der Dichtung verringert werden. Eine die Dichtlippe in die vom einsteckseitigen Ende des zweiten Steckverbinders weggerichtete in die vom einsteckseitigen Ende des zweiten Steckverbinders weggerichtete Richtung verschiebende Kraft kann beispielsweise bei einem Unterdruck im von der Dichtung abgedichteten Raum des Steckverbinders hervorgerufen werden.

Vorzugsweise überlappt sich in Richtung der Längsachse des zweiten Steckverbinders gesehen die stirnseitigen Fläche der Dichtlippe über mindestens 50% ihrer radialen Erstreckung mit der radialen Erstreckung der zweiten Seitenwand der Dichtungsnut.

Die Dichtlippe und die Schmutzlippe bilden einen "dynamischen Abschnitt" der Dichtung, der im geschlossenen Zustand der Steckverbindung mit dem ersten Steckverbinder zusammenwirkt und im offenen Zustand der Steckverbindung frei ist. Der Dichtungsfuß, mit dem die Dichtlippe und Schmutzlippe über einen Verbindungssteg verbunden sind, bildet einen "statischen Abschnitt" der Dichtung, der immer am Boden der Dichtungsnut anliegt und über den die Dichtung gegenüber dem zweiten Steckverbinder abgedichtet ist.

Vorzugsweise umfasst der Dichtungsfuß einen ersten Fußschenkel, der über den Verbindungssteg vorspringt und sich zu seinem freien Ende hin dem einsteckseitigen Ende des zweiten Steckverbinders annähert, und einen zweiten Fußschenkel, der sich zu seinem freien Ende hin vom einsteckseitigen Ende des zweiten Steckverbinders entfernt. Der erste und der zweite Fußschenkel sind hierbei im Bereich ihrer von ihren freien Enden entfernt gelegenen Basen miteinander verbunden, wodurch ein durchgehender statischer Schenkel der Dichtung ausgebildet wird.

Bei der Steckverbindung gemäß der Erfindung ist vorzugsweise weiters vorgesehen, dass die rechtwinklig zur Längserstreckung der Dichtlippe gemessene Dicke der Dichtlippe im Bereich der Mitte der Längserstreckung der Dichtlippe größer als die rechtwinklig zur Längserstreckung des betreffenden Fußschenkels gemessene Dicke von zumindest einem Fußschenkel des Dichtungsfußes im Bereich der Mitte der Längserstreckung des betreffenden Fußschenkels ist und dass die rechtwinklig zur Längserstreckung der Schmutzlippe gemessene Dicke der Schmutzlippe im Bereich der Mitte der Längserstreckung der Schmutzlippe größer als die rechtwinklig zur Längserstreckung des betreffenden Fußschenkels gemessene Dicke von zumindest einem Fußschenkel des Dichtungsfußes im Bereich der Mitte der Längserstreckung des betreffenden Fußschenkels ist.

Vorteilhafterweise sind die Dichtlippe und die Schmutzlippe im Bereich ihrer Lippenbasen miteinander verbunden, wodurch ein durchgehender dynamischer Schenkel der Dichtung ausgebildet wird.

Eine Ausführungsform der Erfindung sieht vor, dass der dynamische Schenkel im geschlossenen Zustand der Steckverbindung ein kleineres axiales Spiel in der Dichtungsnut als der statische Schenkel besitzt. Axiale auf die Dichtung einwirkende Kräfte werden somit über den dynamischen Schenkel auf das mindestens eine die Dichtungsnut ausbildende Teil des zweiten Steckverbinders abgeleitet. Eine demgegenüber modifizierte Ausführungsform sieht vor, dass das axiale Spiel des dynamischen Schenkels gleich groß oder nur geringfügig größer, vorzugsweise um weniger als 10% der axialen Erstreckung des dynamischen Schenkels, als das axiale Spiel des statischen Schenkels ist.

Im geschlossenen Zustand der Steckverbindung sind der erste und der zweite Steckverbinder vorzugsweise durch mindestens eine Rastfeder miteinander verriegelt.

Wenn in dieser Schrift von "außen" und "innen" die Rede ist, so ist dies auf die Lage relativ zur zentralen Längsachse des ersten Steckverbinders bzw. des zweiten Steckverbinders bezogen. Ein weiter außen liegendes Teil weist somit einen größeren Abstand von der zentralen Längsachse als ein weiter innen liegendes Teil auf.

Weitere Vorteile und Einzelheiten der Erfindung werden im Folgenden anhand der beiliegenden Zeichnung erläutert. In dieser zeigen:
Fig. 1 eine stirnseitige Ansicht (Blickrichtung B in Fig. 2);
Fig. 2 einen Schnitt entlang der Linie AA von Fig. 1 (also zwei Hälften von axialen Längsmittelschnitten des ersten und zweiten Steckverbinders in winkelig zueinander stehenden Schnittebenen);
Fig. 3 einen vergrößerten Ausschnitt von Fig. 2;
Fig. 4 eine Schrägsicht der beiden Steckverbinder im voneinander getrennten Zustand;
Fig. 5 eine Schrägsicht entsprechend Fig. 4, die beiden Steckverbinder axial aufgeschnitten:
Fig. 6 ein vergrößertes Detail C von Fig. 5;
Fig. 7 bis Fig. 9 Darstellungen der beiden Steckverbinder analog Fig. 4 bis Fig. 6, aber im teilweise zusammengesteckten Zustand der beiden Steckverbinder;
Fig. 10 bis Fig. 12 Darstellungen analog Fig. 4 bis Fig. 6 im vollständig zusammengesteckten Zustand der beiden Steckverbinder, d.h. im geschlossenen Zustand der Steckverbindung;
Fig. 13 ein zweites Ausführungsbeispiel einer Steckverbindung gemäß der Erfindung, der erste und zweite Steckverbinder teilweise zusammengesteckt, im Längsmittelschnitt.

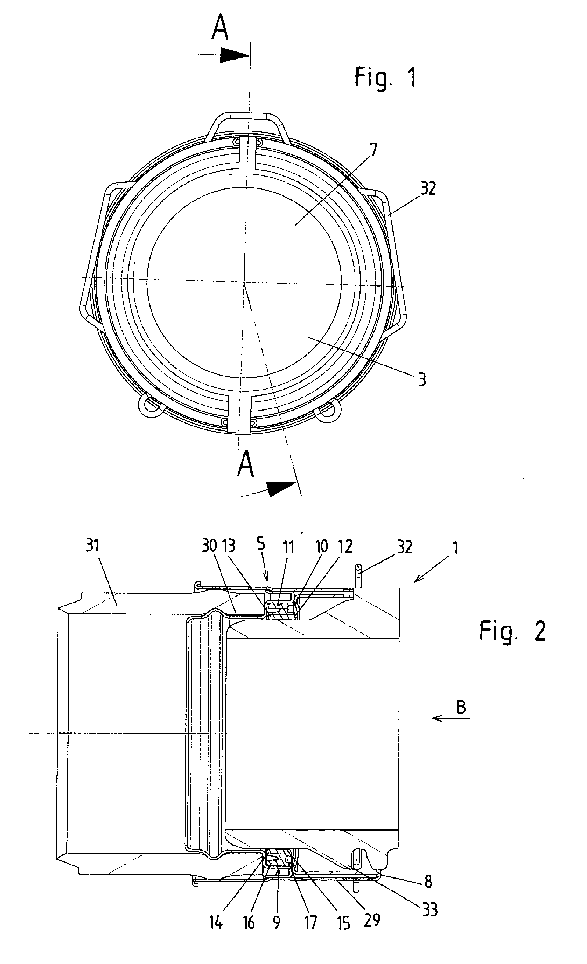

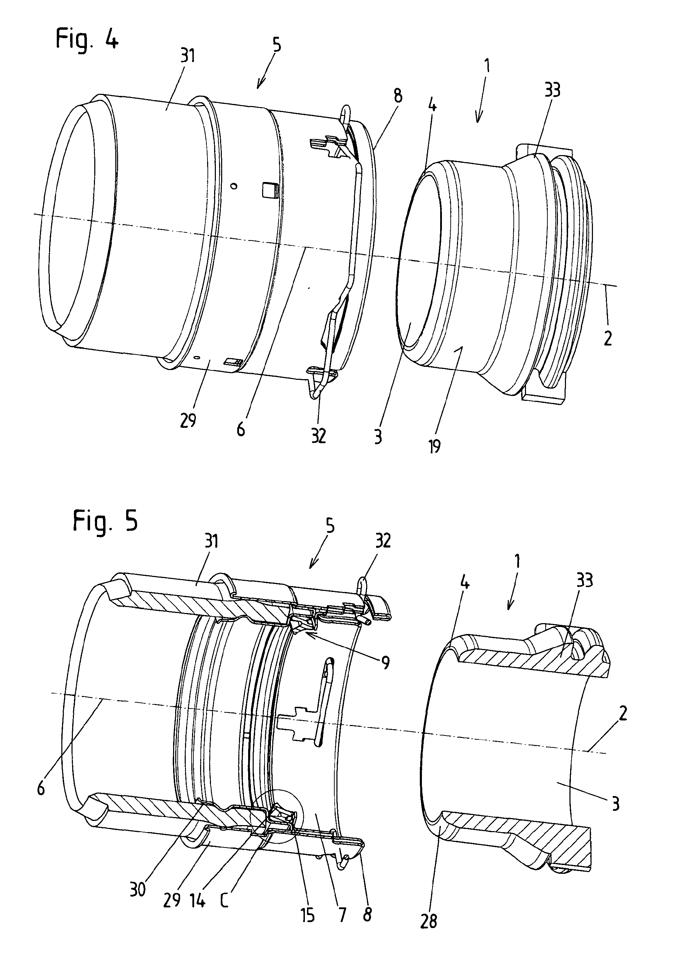

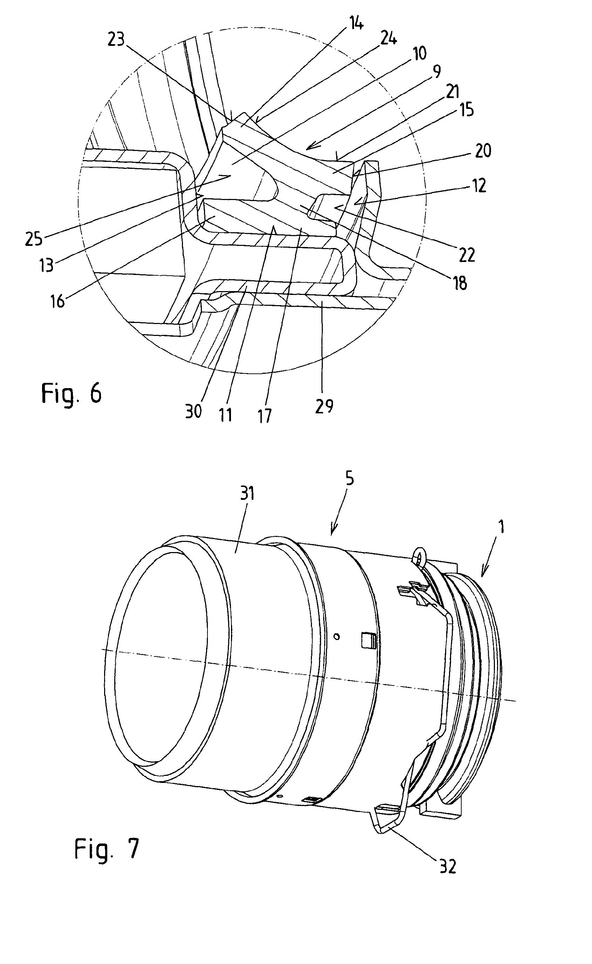

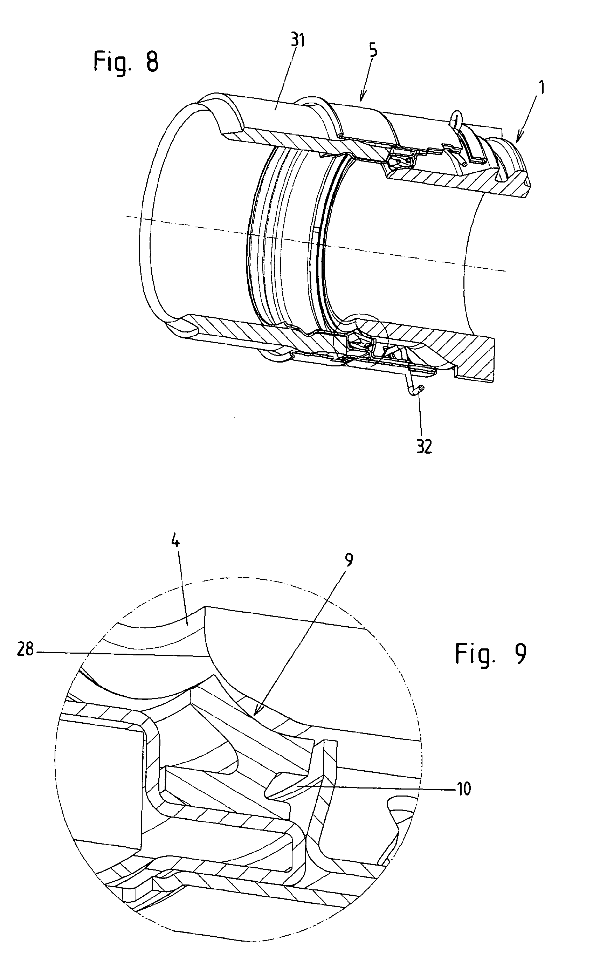

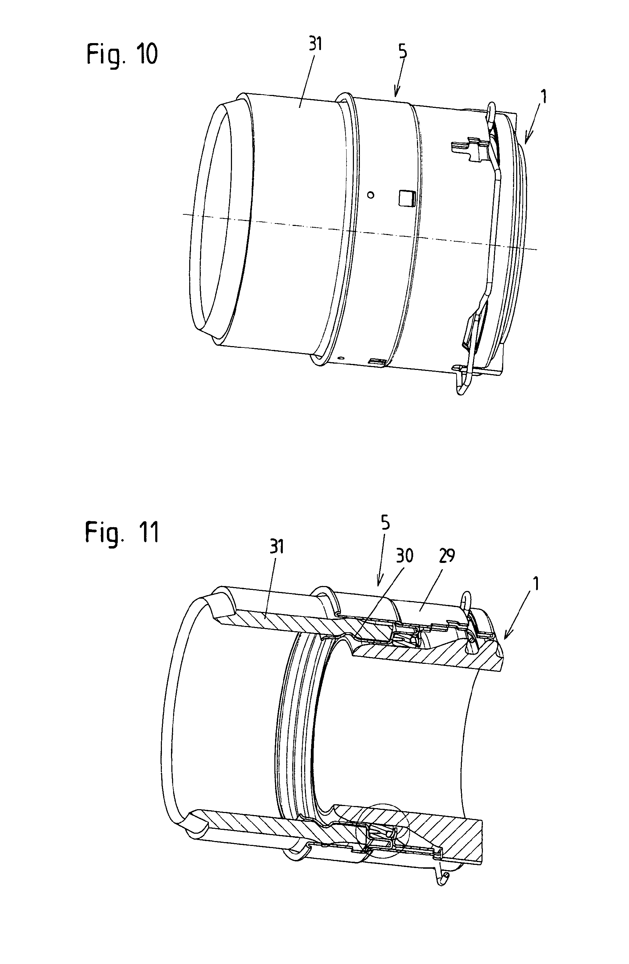

Ein erstes Ausführungsbeispiel einer Steckverbindung gemäß der Erfindung ist in den Fig. 1 bis 12 dargestellt. Die Steckverbindung umfasst einen ersten Steckverbinder 1, der in Form eines Stutzens ausgebildet ist, dessen Wandung eine zentrale Längsachse 2 des ersten Steckverbinders 1 umgibt, wobei ein axialer Durchgangskanal 3 ausgebildet wird.

Weiters umfasst die Steckverbindung einen hülsenförmigen zweiten Steckverbinder 5 mit einem axialen Durchgangskanal 7. Der erste Steckverbinder 1 ist mit seinem einsteckseitigen Ende 4 voraus durch die beim einsteckseitigen Ende 8 des zweiten Steckverbinders 5 gelegene Einstecköffnung in den Durchgangskanal 7 des zweiten Steckverbinders einsteckbar.

Im vollständig zusammengesteckten Zustand der beiden Steckverbinder 1, 5, d.h. im geschlossenen Zustand der Steckverbindung fällt die zentrale Längsachse 2 des ersten Steckverbinders 1 mit der zentralen Längsachse 6 des zweiten Steckverbinders 5 zusammen, d.h. die beiden Steckverbinder 1, 5 liegen koaxial.

Zur Abdichtung zwischen dem ersten und zweiten Steckverbinder 1, 5 dient eine die zentrale Längsachse 6 des zweiten Steckverbinders ringförmig umgebende Dichtung 9, welche am zweiten Steckverbinder 5 gehalten ist. Der zweite Steckverbinder 5 weist hierzu eine die zentrale Längsachse 6 ringförmig umgebende Dichtungsnut 10 auf, welche an der den Durchgangskanal 7 umgebenden inneren Oberfläche des zweiten Steckverbinders 5 angeordnet ist und sich somit zur zentralen Längsachse 6 hin öffnet.

Die Dichtungsnut 10 besitzt einen Boden 11 und erste und zweite Seitenwände 12, 13, von denen die erste Seitenwand 12 näher beim einsteckseitigen Ende 8 des zweiten Steckverbinders als die zweite Seitenwand 13 liegt.

Die Dichtung 9 weist eine Dichtlippe 14 auf. Diese ist im geschlossenen Zustand der Steckverbindung an die äußere Oberfläche 19 des ersten Steckverbinders 1 angedrückt und hierbei gegenüber dem ersten Steckverbinder 1 abgedichtet. Zu ihrem freien Ende hin entfernt sich die Dichtlippe 14 vom einsteckseitigen Ende 8 des zweiten Steckverbinders 5.

Die Dichtung 9 weist weiters eine Schmutzlippe 15 auf, die im geschlossenen Zustand der Steckverbindung an die äußere Oberfläche 19 des ersten Steckverbinders 1 angedrückt ist. Die Schmutzlippe 15 nähert sich hierbei zu ihrem freien Ende hin dem einsteckseitigen Ende 8 des zweiten Steckverbinders 5 an und der ringförmige Bereich der Anlage der Schmutzlippe 15 an der äußeren Oberfläche 19 im geschlossenen Zustand der Steckverbindung befindet sich näher beim einsteckseitigen Ende 8 des zweiten Steckverbinders 5 als der ringförmige Bereich der Anlage der Dichtlippe 14 an der äußeren Oberfläche 19 des zweiten Steckverbinders 5. Von der Schmutzlippe 15 wird einem Eindringen von Schmutzpartikeln bis zur Dichtlippe 14 entgegengewirkt, wodurch die dauerhafte Dichtheit der Steckverbindung verbessert werden kann. Durch die Schmutzlippe 15 kann, zumindest im Neuzustand der Dichtung, vorteilhafterweise auch eine Abdichtung des Innenraums der Steckverbindung gegenüber einem im Außenraum vorliegenden Überdruck erreicht werden, d.h. im Innenraum kann ein Unterdruck bzw. Vakuum ausgebildet werden.

Die Dichtlippe 14 und die Schmutzlippe 15 sind im Bereich ihrer jeweiligen Lippenbasis, also im Bereich, ausgehend von dem sie frei auskragend ausgebildet sind, miteinander verbunden und über einen Verbindungssteg 18 mit einem Dichtungsfuß verbunden. Der Dichtungsfuß umfasst einen ersten Fußschenkel 16, der am Boden 11 der Dichtungsnut 10 anliegt und sich ausgehend vom Verbindungssteg 18 vom einsteckseitigen Ende 8 des zweiten Steckverbinders 5 zum freien Ende des ersten Fußschenkels 16 hin zunehmend entfernt. Weiters umfasst der Dichtungsfuß einen zweiten Fußschenkel 17, der am Boden 11 der Dichtungsnut 10 anliegt und sich ausgehend vom Verbindungssteg 18 dem einsteckseitigen Ende 8 des zweiten Steckverbinders 5 zum freien Ende des zweiten Fußschenkels 17 hin zunehmend annähert.

Über den Dichtungsfuß ist die Dichtung 9 gegenüber dem zweiten Steckverbinder 5 abgedichtet.

Die Dichtlippe 14 und Schmutzlippe 15 zusammen mit ihrer Verbindung im Bereich ihrer Lippenbasen können auch als durchgehender "dynamischer Schenkel" der Dichtung 9 angesehen werden. Der erste Fußschenkel 16 und der zweite Fußschenkel 17 zusammen mit der Verbindung im Bereich ihrer Basen können auch als "statischer Schenkel" der Dichtung 9 angesehen werden. Der dynamische und der statische Schenkel der Dichtung sind dann im Bereich ihrer einander zugewandten Seitenflächen über den Verbindungssteg 18 miteinander verbunden.

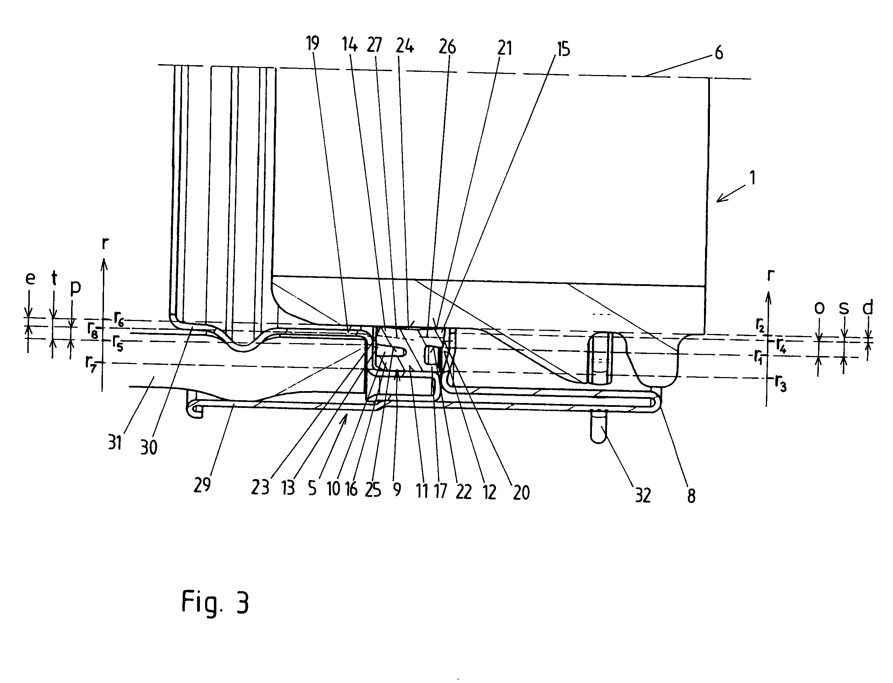

Die Schmutzlippe 15 besitzt an ihrem freien Ende eine stirnseitige Fläche 20. Im geschlossenen Zustand der Steckverbindung besitzt die stirnseitige Fläche 20 der Schmutzlippe 15 bezogen auf die radiale Richtung des zweiten Steckverbinders 5 eine Erstreckung von r₁ bis r₂ (vgl. Fig. 3).

Zwischen der stirnseitigen Fläche 20, welche die Schmutzlippe 15 an ihrem freien Ende aufweist, schließt mit den beiden Seitenflächen 21, 22 der Schmutzlippe 15, von denen die eine Seitenfläche 21 zur zentralen Längsachse 6 gerichtet ist und die andere Seitenfläche 22 von der zentralen Längsachse 6 gerichtet ist, ist im Querschnitt durch die Dichtung 9 bzw. im Längsmittelschnitt des zweiten Steckverbinders 5 gesehen vorzugsweise jeweils eine Abwinkelung ausgebildet, wie dies in den Figuren dargestellt ist. Auch eine Abrundung zwischen der stirnseitigen Fläche 20 und der Seitenfläche 21 und/oder der Seitenfläche 22 ist möglich. Sowohl im Fall einer Abwinkelung zwischen der stirnseitigen Fläche 20 und einer der Seitenflächen 21, 22 der Schmutzlippe 15 als auch im Fall einer Abrundung ist der Übergang zwischen der jeweiligen Seitenfläche 21, 22 und der stirnseitigen Fläche 20 der Schmutzlippe 15 jeweils dort, wo im Querschnitt durch die Dichtung 9 gesehen der Winkel zwischen der Richtung der Längserstreckung der Schmutzlippe 15 und der Oberfläche der Schmutzlippe 15 größer als 45° wird.

Die Richtung der Längserstreckung der Schmutzlippe 15 ist im Querschnitt durch die Dichtung 9 gesehen durch die Mittellinie zwischen den beiden Seitenflächen 21, 22 der Dichtung 9 definiert, wobei diese Mittellinie vorzugsweise zumindest im Wesentlichen eine Gerade ist.

Die Richtung der Längserstreckung der Schmutzlippe 15 ist in Fig. 3 im geschlossenen Zustand der Steckverbindung als strichlierte Linie 26 eingezeichnet.

Die radiale Erstreckung der ersten Seitenwand 12 der Dichtungsnut 10 von ihrem dem Boden 11 der Dichtungsnut 10 benachbarten Ende bis zu ihrem vom Boden 11 der Dichtungsnut 10 abgelegenen Ende verläuft von r₃ bis r₄.

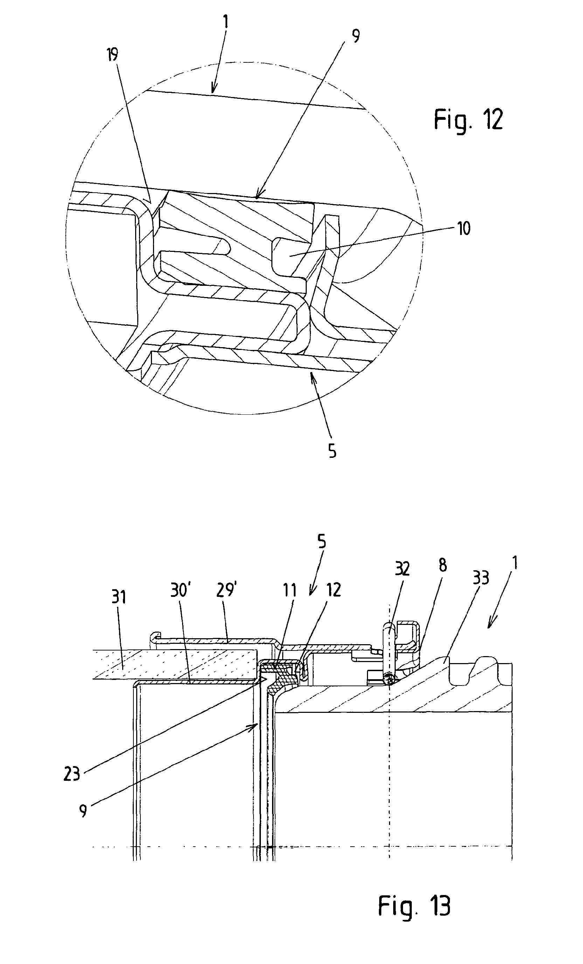

An das vom Boden 11 der Dichtungsnut 10 abgelegene Ende der ersten Seitenwand 12 der Dichtungsnut 10 schließt über eine Abwinkelung eine zur zentralen Längsachse 6 des zweiten Steckverbinders 5 gerichtete Oberfläche an. Diese wird im gezeigten Ausführungsbeispiel vom stirnseitigen Ende eines die Seitenwand 12 bildenden Stegs gebildet. Das vom Boden 11 der Dichtungsnut 10 abgelegene Ende der ersten Seitenwand 12 könnte auch über eine Abrundung an eine zur zentralen Längsachse 6 des zweiten Steckverbinders 5 gerichtete Oberfläche anschließen (vgl. das weiter unten beschriebene zweite Ausführungsbeispiel entsprechend Fig. 13). In beiden Fällen (Abwinkelung oder Abrundung) liegt der Übergang zwischen der ersten Seitenwand 12 und der zur zentralen Längsachse 6 des zweiten Steckverbinders 5 gerichteten Oberfläche im Längsmittelschnitt durch den zweiten Steckverbinder 5 gesehen dort, wo der Winkel zwischen der zentralen Längsachse 2 des zweiten Steckverbinders 5 und der Oberfläche des die Dichtungsnut 10 bildenden Teils des zweiten Steckverbinders 5 kleiner als 45° wird.

Der Boden 11 der Dichtungsnut 10 und die erste Seitenwand 12 werden in diesem Ausführungsbeispiel von unterschiedlichen Teilen gebildet. Das dem Boden 11 benachbarte Ende der ersten Seitenwand 12 liegt in diesem Ausführungsbeispiel dort, wo der Abstand des die erste Seitenwand 12 bildenden Teils von der zentralen Längsachse 6 größer als der Abstand des Bodens 11 von der zentralen Längsachse 6 wird. In anderen Ausführungsformen der Erfindung (beispielsweise dem weiter unten beschriebenen Ausführungsbeispiel entsprechend Fig. 13) könnte die erste Seitenwand 12 mit dem Boden 11 auch einstückig ausgebildet sein. In diesem Fall wäre am Ende der ersten Seitenwand 12, welches an den Boden 11 der Dichtungsnut 10 anschließt, der Übergang zum Boden 11 der Dichtungsnut 10 dort, wo der Winkel zwischen der zentralen Längsachse 6 des zweiten Steckverbinders 5 und der Oberfläche des den Boden 11 der Dichtungsnut 10 bildenden Teils des zweiten Steckverbinders 5 kleiner als 45° wird.

Die radiale Erstreckung der stirnseitigen Fläche 20 der Schmutzlippe 15 mit der radialen Erstreckung der ersten Seitenwand 12 überlappt sich von r₁ bis r₄. Der Bereich der Überlappung ist in Fig. 3 mit o bezeichnet.

Durch diese Überlappung o kann sich die stirnseitige Fläche 20 der Schmutzlippe 15 an der ersten Seitenwand 12 der Dichtungsnut 10 abstützen, wenn die Schmutzlippe 15 in Richtung zum einsteckseitigen Ende 8 des zweiten Steckverbinders 5 verschoben wird und eine solche Verschiebung wird dadurch von der ersten Seitenwand 12 der Dichtungsnut 10 begrenzt.

Zur Ausbildung einer solchen Überlappung o ist der ebenfalls in Fig. 3 eingezeichnete Betrag s der radialen Erstreckung der stirnseitigen Fläche 20 der Schmutzlippe 15 im geschlossenen Zustand der Steckverbindung größer als der Abstand d zwischen der zylindrischen äußeren Oberfläche 19 des ersten Steckverbinders 1, an der die Dichtlippe 14 und Schmutzlippe 15 der Dichtung 9 anliegen, und dem vom Boden 11 der Dichtungsnut 10 abgelegenen Ende der ersten Seitenwand 12 der Dichtungsnut 10.

Vorzugsweise ist hierbei die radiale Erstreckung der stirnseitigen Fläche 20 der Schmutzlippe 15 um mindestens 50%, besonders bevorzugt um mindestens 100% größer als der Abstand zwischen der zylindrischen äußeren Oberfläche 19 des ersten Steckverbinders 1 und dem vom Boden 11 der Dichtungsnut 10 abgelegenen Ende der ersten Seitenwand 12 der Dichtungsnut 10.

Der Bereich der radialen Erstreckung der stirnseitigen Fläche 20 der Schmutzlippe 15, in welchem in axialer Richtung gesehen keine Überlappung mit der radialen Erstreckung der ersten Seitenwand 12 der Dichtungsnut 10 vorliegt, liegt im radialen Bereich eines Zwischenraums d zwischen dem vom Boden 11 der Dichtungsnut 10 abgelegenen Ende der ersten Seitenwand 12 der Dichtungsnut 10 und der zylindrischen äußeren Oberfläche 19 des ersten Steckverbinders 1.

Die Schmutzlippe 15 liegt im Bereich des Übergangs zwischen der stirnseitigen Fläche 20 und der der zentralen Längsachse 6 des zweiten Steckverbinders 5 zugewandten Seitenfläche 21 der Schmutzlippe 15 der Dichtung 9 an der äußeren Oberfläche 19 des ersten Steckverbinders 1 an, wobei der Übergang zwischen der stirnseitigen Fläche 20 und der Seitenfläche 21 der Schmutzlippe 15 der Dichtung 9 vorzugsweise von einer Abwinkelung gebildet wird, die eine Dichtkante ausbildet.

Die Dichtlippe 14 besitzt an ihrem freien Ende eine stirnseitige Fläche 23. Im geschlossenen Zustand der Steckverbindung besitzt die stirnseitige Fläche 23 der Dichtlippe 14 bezogen auf die radiale Richtung des zweiten Steckverbinders 5 eine Erstreckung von r₅ bis r₆ (vgl. Fig. 3).

Zwischen der stirnseitigen Fläche 23, welche die Dichtlippe 14 an ihrem freien Ende aufweist, schließt mit den beiden Seitenflächen 24, 25 der Dichtlippe 14, von denen die eine Seitenfläche 24 zur zentralen Längsachse 6 gerichtet ist und die andere Seitenfläche 25 von der zentralen Längsachse 6 weggerichtet ist, ist im Querschnitt durch die Dichtung 9 bzw. im Längsmittelschnitt des zweiten Steckverbinders 5 gesehen vorzugsweise jeweils eine Abwinkelung ausgebildet, wie dies in den Figuren dargestellt ist. Auch eine Abrundung zwischen der stirnseitigen Fläche 23 und der Seitenfläche 24 und/oder der Seitenfläche 25 ist möglich. Sowohl im Fall einer Abwinkelung zwischen der stirnseitigen Fläche 23 und einer der Seitenflächen 24, 25 der Dichtlippe 14 als auch im Fall einer Abrundung ist der Übergang zwischen der jeweiligen Seitenfläche 24, 25 und der stirnseitigen Fläche 23 der Dichtlippe 14 jeweils dadurch definiert, dass dieser Übergang dort liegt, wo im Querschnitt durch die Dichtung 9 gesehen der Winkel zwischen der Richtung der Längserstreckung der Dichtlippe 14 und der Oberfläche der Dichtlippe größer als 45° wird.

Die Richtung der Längserstreckung der Dichtlippe 14 ist im Querschnitt durch die Dichtung 9 gesehen durch die Mittellinie zwischen den beiden Seitenflächen 24, 25 der Dichtung 9 definiert, wobei diese Mittellinie vorzugsweise zumindest im Wesentlichen eine Gerade ist.

Die Richtung der Längserstreckung der Dichtlippe 14 ist in Fig. 3 im geschlossenen Zustand der Steckverbindung als strichlierte Linie 27 eingezeichnet.

Die radiale Erstreckung der zweiten Seitenwand 13 der Dichtungsnut 10 von ihrem dem Boden 11 der Dichtungsnut 10 benachbarten Ende bis zu ihrem vom Boden 11 der Dichtungsnut 10 abgelegenen Ende verläuft von r₇ bis r₈.

An das vom Boden 11 der Dichtungsnut 10 abgelegene Ende der zweiten Seitenwand 13 der Dichtungsnut 10 schließt über eine Abrundung eine zur zentralen Längsachse 6 des zweiten Steckverbinders 5 gerichtete Oberfläche an. Das vom Boden 11 der Dichtungsnut 10 abgelegene Ende der zweiten Seitenwand 13 könnte auch über eine Abwinkelung an eine zur zentralen Längsachse 6 des zweiten Steckverbinders 5 gerichtete Oberfläche anschließen. In beiden Fällen (Abwinkelung oder Abrundung) liegt der Übergang zwischen der zweiten Seitenwand 13 und der zur zentralen Längsachse 6 des zweiten Steckverbinders 5 gerichteten Oberfläche im Längsmittelschnitt durch den zweiten Steckverbinder 5 gesehen dort, wo der Winkel zwischen der zentralen Längsachse 2 des zweiten Steckverbinders 5 und der Oberfläche des die Dichtungsnut 10 bildenden Teils des zweiten Steckverbinders 5 kleiner als 45° wird.

Der Boden 11 der Dichtungsnut 10 und die zweite Seitenwand 13 sind in diesem Ausführungsbeispiel einteilig ausgebildet. Am Ende der ersten Seitenwand 12, welches an den Boden 11 der Dichtungsnut 10 anschließt, ist der Übergang zum Boden 11 der Dichtungsnut 10 dadurch definiert, dass dieser Übergang dort liegt, wo der Winkel zwischen der zentralen Längsachse 6 des zweiten Steckverbinders 5 und der Oberfläche des den Boden 11 der Dichtungsnut 10 bildenden Teils des zweiten Steckverbinders 5 kleiner als 45° wird. In anderen Ausführungsformen der Erfindung könnten die zweite Seitenwand 13 und der Boden 11 auch von unterschiedlichen Teilen gebildet sein. In diesem Fall könnte das dem Boden 11 benachbarte Ende der zweiten Seitenwand 13 dort liegen, wo der Abstand des die zweite Seitenwand 13 bildenden Teils von der zentralen Längsachse 6 größer als der Abstand des Bodens 11 von der zentralen Längsachse 6 wird.

Die radiale Erstreckung der stirnseitigen Fläche 23 der Dichtlippe 14 mit der radialen Erstreckung der zweiten Seitenwand 13 überlappt sich von r₅ bis r₈. Der Bereich der Überlappung ist in Fig. 3 mit p bezeichnet.

Durch diese Überlappung p kann sich die stirnseitige Fläche 23 der Dichtlippe 14 an der zweiten Seitenwand 13 der Dichtungsnut 10 abstützen, wenn die Dichtlippe 14 in Richtung vom einsteckseitigen Ende 8 des zweiten Steckverbinders 5 weg verschoben wird und eine solche Verschiebung wird dadurch von der zweiten Seitenwand 13 der Dichtungsnut 10 begrenzt.

Zur Ausbildung einer solchen Überlappung p ist der ebenfalls in Fig. 3 eingezeichnete Betrag t der radialen Erstreckung der stirnseitigen Fläche 23 der Dichtlippe 14 im geschlossenen Zustand der Steckverbindung größer als der Abstand e zwischen der zylindrischen äu-βeren Oberfläche 19 des ersten Steckverbinders 1, an der die Dichtlippe 14 und Schmutzlippe 15 der Dichtung 9 anliegen, und dem vom Boden 11 der Dichtungsnut 10 abgelegenen Ende der zweiten Seitenwand 13 der Dichtungsnut 10.

Vorzugsweise ist hierbei die radiale Erstreckung der stirnseitigen Fläche 23 der Dichtlippe 14 um mindestens 50%, besonders bevorzugt um mindestens 100% größer als der Abstand zwischen der zylindrischen äußeren Oberfläche 19 des ersten Steckverbinders 1 und dem vom Boden 11 der Dichtungsnut 10 abgelegenen Ende der zweiten Seitenwand 13 der Dichtungsnut 10.

Der Bereich der radialen Erstreckung der stirnseitigen Fläche 23 der Dichtlippe 14, in welchem in axialer Richtung gesehen keine Überlappung mit der radialen Erstreckung der zweiten Seitenwand 13 der Dichtungsnut 10 vorliegt, liegt im radialen Bereich eines Zwischenraums e zwischen dem vom Boden 11 der Dichtungsnut 10 abgelegenen Ende der zweiten Seitenwand 13 der Dichtungsnut 10 und der zylindrischen äußeren Oberfläche 19 des ersten Steckverbinders 1.

Die Dichtlippe 14 liegt im Bereich des Übergangs zwischen der stirnseitigen Fläche 23 und der der zentralen Längsachse 6 des zweiten Steckverbinders 5 zugewandten Seitenfläche 24 der Dichtlippe 14 der Dichtung 9 an der äußeren Oberfläche 19 des ersten Steckverbinders 1 an, wobei der Übergang zwischen der stirnseitigen Fläche 23 und der Seitenfläche 24 der Dichtlippe 14 der Dichtung 9 vorzugsweise von einer Abwinkelung gebildet wird, die eine Dichtkante ausbildet.

Vorzugsweise schließt im geschlossenen Zustand der Steckverbindung die Richtung der Längserstreckung 26 der Schmutzlippe 15 mit der zentralen Längsachse 6 des zweiten Steckverbinders 5 einen Winkel von weniger als 20°, besonders bevorzugt weniger als 10° ein, wobei im gezeigten Ausführungsbeispiel eine annähernd parallele Ausrichtung vorliegt.

Vorzugsweise schließt im geschlossenen Zustand der Steckverbindung die Richtung 27 der Längserstreckung der Dichtlippe 14 mit der zentralen Längsachse 6 des zweiten Steckverbinders 5 einen Winkel von weniger als 20°, besonders bevorzugt weniger als 10° ein.

Im geschlossenen Zustand der Steckverbindung weisen die Schmutzlippe 15 und die Dichtlippe 14 zusammen mit dem Verbindungssteg 18 annähernd eine T-Form auf.

Im geöffneten Zustand der Steckverbindung ist der Winkel zwischen der Richtung 27 der Längserstreckung der Dichtlippe 14 und der zentralen Längsachse 2 größer, wobei sich die Dichtlippe 14 zu ihrem freien Ende hin der zentralen Längsachse 6 annähert. Beim Einstecken des ersten Steckverbinders 1 läuft der erste Steckverbinder 1 mit einer Einlaufschräge 28 an die Dichtlippe 14 an, wobei die Dichtlippe 14 einfedert und hierbei verschwenkt wird (derart, dass sich ihr freies Ende von der zentralen Längsachse 6 entfernt) und damit auch eine Verschwenkung der Schmutzlippe 15 erfolgt (derart, dass sich ihr freies Ende der zentralen Längsachse 6 annähert), wodurch die Schmutzlippe 15 an die äußere Oberfläche 19 des ersten Steckverbinders 1 angedrückt wird.

Im geöffneten Zustand der Steckverbindung liegt die stirnseitige Fläche 20 der Schmutzlippe 15 in axialer Richtung vom einsteckseitigen Ende 8 des zweiten Steckverbinders 5 aus gesehen insgesamt oder zumindest weitgehend hinter der ersten Seitenwand 12 der Dichtungsnut 10.

Vorteilhafterweise ist der die Dichtlippe 14 und Schmutzlippe 15 umfassende dynamische Schenkel der Dichtung 9 massiver ausgebildet als der den ersten und zweiten Fußschenkel 16, 17 umfassende statische Schenkel. Hierbei ist die rechtwinklig zur Längserstreckung 27 der Dichtlippe 14 gemessene Dicke der Dichtlippe 14 im Bereich der Mitte der Längserstreckung der Dichtlippe 14 (mittig zwischen der Basis und dem freien Ende der Dichtlippe 14) größer als die rechtwinklig zur Längserstreckung des ersten Fußschenkels 16 gemessene Dicke des ersten Fußschenkels 16 im Bereich der Mitte der Längserstreckung des ersten Fußschenkels 16 und/oder die rechtwinklig zur Längserstreckung des zweiten Fußschenkels 17 gemessene Dicke des zweiten Fußschenkels 17 im Bereich der Mitte der Längserstreckung des zweiten Fußschenkels 17. Die rechtwinklig zur Längserstreckung 26 der Schmutzlippe 15 gemessene Dicke der Schmutzlippe 15 im Bereich der Mitte der Längserstreckung der Schmutzlippe 15 ist hierbei größer als die rechtwinklig zur Längserstreckung des ersten Fußschenkels 16 gemessene Dicke des ersten Fußschenkels 16 im Bereich der Mitte der Längserstreckung des ersten Fußschenkels 16 und/oder die rechtwinklig zur Längserstreckung des zweiten Fußschenkels 17 gemessene Dicke des zweiten Fußschenkels 17 im Bereich der Mitte der Längserstreckung des zweiten Fußschenkels 17. Vorzugsweise liegen im geschlossenen Zustand der Steckverbindung die Längserstreckungen der Dichtlippe 14, Schmutzlippe 15 und Fußschenkel 16, 17 zumindest weitgehend parallel zur zentralen Längsachse 6 und sind die Dicken der Dichtlippe 14, Schmutzlippe 15 und Fußschenkel 16, 17 über ihre Längserstreckungen zumindest weitgehend konstant. Damit ist zur massiveren Ausbildung des dynamischen Schenkels der Dichtung 9 als des statischen Schenkels, bezogen auf den geschlossenen Zustand der Steckverbindung, der Betrag t der radialen Erstreckung der stirnseitigen Fläche 23 der Dichtlippe 14 größer als der Betrag der radialen Erstreckung der stirnseitigen Fläche des ersten Fußschenkels 16 und/oder des zweiten Fußschenkels 17. Weiters ist der Betrag s der radialen Erstreckung stirnseitigen Fläche 20 der Schmutzlippe 15 größer als der Betrag der radialen Erstreckung der stirnseitigen Fläche des zweiten Fußschenkels 17 und/oder des ersten Fußschenkels 16.

Durch eine solche Ausbildung kann erreicht werden, dass bei der Relativbewegung der Dichtung 9 in der Dichtungsnut 10 gegenüber dem zweiten Steckverbinder 5 auftretenden Belastungen, beispielsweise durch Druckunterschiede zwischen dem Innenraum und dem Außenraum der Steckverbindung oder durch den Vorgang des Zusammensteckens bzw. Auseinanderziehens der beiden Steckverbinder 1, 5, großteils vom dynamischen Schenkel der Dichtung 9 getragen werden, während die Ausgleichsfunktion der Dichtung 9 großteils durch den statischen Schenkel und den Steg übernommen werden.

Im in den Fig. 1 bis 12 dargestellten Ausführungsbeispiel umfasst der zweite Steckverbinder 5 ein erstes und ein zweites hülsenförmiges Teil 29, 30, welche zusammen eine Steckerhülse des zweiten Steckverbinders 5 ausbilden. Das erste hülsenförmige Teil 29, das eine Außenwand des zweiten Steckverbinders 5 bildet, besitzt eine Umbiegung um 180° im Bereich des einsteckseitigen Endes 8 des zweiten Steckverbinders. Das zweite hülsenförmige Teil 30 besitzt eine Umbiegung um 180° in einem mittleren Bereich der axialen Ausdehnung des zweiten Steckverbinders 5 und bildet den Boden 11 und die zweite Seitenwand 13 der Dichtungsnut 10. Die erste Seitenwand 12 der Dichtungsnut 10 wird von einem in Richtung zur zentralen Längsachse 6 abgewinkelten Endabschnitt des ersten hülsenförmigen Teils 29 gebildet.

In einem dem einsteckseitigen Ende 8 gegenüberliegenden Endbereich weisen die Hülsenteile 29, 30 einen Zwischenraum zwischen sich auf, in den das Ende eines Schlauchs 31 einsteckbar ist, an welchem der zweite Steckverbinder 5 anzubringen ist. Der Schlauch 31 wird nach dem Einstecken zwischen den beiden hülsenförmigen Teilen 29, 30 verpresst. Zur Verrastung der beiden Steckverbinder 1, 5 im zusammengesteckten Zustand ist eine Rastfeder 32 vorgesehen, die im gezeigten Ausführungsbeispiel am zweiten Steckverbinder 5 gehalten ist und im geschlossenen Zustand der Steckverbindung hinter einer Rastschulter 33 des ersten Steckverbinders 1 eingerastet ist.

Die Dichtung 9 besteht aus einem gummielastischen Material, beispielsweise einem Elastomer, einem thermoplastischen Elastomer oder Silikon. Verstärkungseinlagen aus anderen Materialien sind denkbar und möglich.

Ein weiteres mögliches Ausführungsbeispiel der Erfindung ist in Fig. 13 dargestellt. Der Unterschied zum zuvor beschriebenen Ausführungsbeispiel besteht in der Ausbildung der Steckerhülse des zweiten Steckverbinders. Es sind wiederum ein erstes hülsenförmiges Teil 29', welches eine Außenwand des zweiten Steckverbinders 5 bildet und ein zweites hülsenförmiges Teil 30' vorgesehen, welches, abgesehen von einem umgestülpten Endabschnitt im Bereich des einsteckseitigen Endes 8 vollständig innerhalb des ersten hülsenförmigen Teils 29' liegt. Die Dichtungsnut 10 wird hier nur vom inneren zweiten hülsenförmigen Teil 30' gebildet, wobei der Boden 11 und die Seitenwände 12, 13 durch entsprechend umgebogene Abschnitte des zweiten hülsenförmigen Teils 30' ausgebildet werden.

Unterschiedliche Modifikationen der gezeigten Ausführungsbeispiele sind denkbar und möglich, ohne den Bereich der Erfindung zu verlassen. So könnte beispielsweise der Dichtungsfuß auch in einer anderen Form ausgebildet sein, z.B. könnte der zweite Fußschenkel 17 entfallen. Der statische Schenkel würde somit nur vom ersten Fußschenkel 16 und dem Verbindungsbereich mit dem Verbindungssteg 18 gebildet werden, sodass der statische Schenkel mit dem Verbindungssteg 18 eine L-förmige Ausbildung aufweisen würde.

Der erste Steckverbinder 1 wird vorzugsweise starr an einem Teil angeschlossen, welches einen medienführenden Kanal aufweist. Ein Anschluss an einem Rohr oder an einem flexiblen Schlauch ist ebenfalls möglich.

Der zweite Steckverbinder 5 wird vorzugsweise an einen flexiblen Schlauch angeschlossen. Aber auch ein Anschluss an einem Rohr oder an einem Teil, welches einen medienführenden Kanal aufweist, ist denkbar und möglich.

Wenn zumindest einer der Steckverbinder 1, 5 an einen flexiblen Schlauch angeschlossen wird, was bevorzugt ist, so könnten die Steckverbinder 1, 5 auch als Schlauchkupplungen bezeichnet werden.

Durch Verrastung miteinander verbindbare Steckverbinder für flüssige oder gasförmige Medien werden auch als Schnellverschlusskupplungen bezeichnet.

Mittels einer erfindungsgemäßen Steckverbindung können insbesondere Verbindungen von Abschnitten von Kühlwasserleitungen von Verbrennungsmotoren oder Ladeluftleitungen von Verbrennungsmotoren hergestellt werden. In solchen herrscht ein relativ geringer Druck, beispielsweise bis 6bar.

### Legende

### zu den Hinweisziffern:

- 1: erster Steckverbinder
- 2: zentrale Längsachse
- 3: Durchgangskanal
- 4: einsteckseitiges Ende
- 5: zweiter Steckverbinder
- 6: zentrale Längsachse
- 7: Durchgangskanal
- 8: einsteckseitiges Ende
- 9: Dichtung
- 10: Dichtungsnut
- 11: Boden
- 12: erste Seitenwand
- 13: zweite Seitenwand
- 14: Dichtlippe
- 15: Schmutzlippe
- 16: erster Fußschenkel
- 17: zweiter Fußschenkel
- 18: Verbindungssteg
- 19: äußere Oberfläche
- 20: stirnseitige Fläche
- 21: Seitenfläche
- 22: Seitenfläche
- 23: stirnseitige Fläche
- 24: Seitenfläche
- 25: Seitenfläche

- 26: Richtung der Längserstreckung
- 27: Richtung der Längserstreckung
- 28: Einlaufschräge
- 29, 29': erstes hülsenförmiges Teil
- 30, 30': zweites hülsenförmiges Teil
- 31: Schlauch
- 32: Rastfeder
- 33: Rastschulter

## Patentansprüche

1. Steckverbindung zum Verbinden von Leitungen für flüssige oder gasförmige Medien, umfassend einen ersten Steckverbinder (1) mit einer zentralen Längsachse (2) und mit einem axialen Durchgangskanal (3) und einen zweiten Steckverbinder (5) mit einer zentralen Längsachse (6) und mit einem axialen Durchgangskanal (7), in den der erste Steckverbinder (1) von einem einsteckseitigen Ende (8) des zweiten Steckverbinders her einsteckbar ist, und mit einer ringförmigen Dichtung (9), welche in einer von einem Boden (11), einer ersten Seitenwand (12) und einer gegenüber der ersten Seitenwand (12) weiter vom einsteckseitigen Ende (8) des zweiten Steckverbinders (5) entfernt gelegenen zweiten Seitenwand (13) begrenzten ringförmigen Dichtungsnut (10) des zweiten Steckverbinders (5) angeordnet ist und welche eine Dichtlippe (14), die im geschlossenen Zustand der Steckverbindung an einer äußeren Oberfläche (19) des ersten Steckverbinders (1) anliegt und sich hierbei zu ihrem freien Ende hin vom einsteckseitigen Ende (8) des zweiten Steckverbinders (5) entfernt, und eine Schmutzlippe (15) umfasst, die im geschlossenen Zustand der Steckverbindung an der äußeren Oberfläche (19) des ersten Steckverbinders (1) anliegt und sich hierbei zu ihrem freien Ende hin dem einsteckseitigen Ende (8) des zweiten Steckverbinders (5) annähert und die an ihrem freien Ende eine stirnseitige Fläche (20) besitzt, **dadurch gekennzeichnet, dass** sich im geschlossenen Zustand der Steckverbindung die radiale Erstreckung (r1-r2) der stirnseitigen Fläche (20) der Schmutzlippe (15) in Richtung der zentralen Längsachse (6) des zweiten Steckverbinders (5) gesehen mit der radialen Erstreckung (r3-r4) der ersten Seitenwand (12) der Dichtungsnut (10) überlappt, wobei die Schmutzlippe (15) mit ihrer stirnseitigen Fläche (20) an der ersten Seitenwand (12) der Dichtungsnut (10) abstützbar ist.

2. Steckverbindung nach Anspruch 1, **dadurch gekennzeichnet, dass** sich die stirnseitige Fläche (20) der Schmutzlippe (15) über mindestens 50% ihrer radialen Erstreckung (r1-r2) mit der radialen Erstreckung (r3-r4) der ersten Seitenwand (12) der Dichtungsnut (10) überlappt.

3. Steckverbindung nach Anspruch 1 oder 2, **dadurch gekennzeichnet, dass** die Dichtlippe (14) an ihrem freien Ende eine stirnseitige Fläche (23) besitzt, deren radiale Erstreckung (r5-r6) sich im geschlossenen Zustand der Steckverbindung in Richtung der zentralen Längsachse (6) des zweiten Steckverbinders (5) gesehen mit der radialen Erstreckung (r7-r8) der zweiten Seitenwand (13) der Dichtungsnut (10) überlappt.

4. Steckverbindung nach einem der Ansprüche 1 bis 3, **dadurch gekennzeichnet, dass** die Dichtung (9) einen Dichtungsfuß (16, 17) aufweist, mit dem die Dichtlippe (14) und die Schmutzlippe (15) über einen Verbindungssteg (18) verbunden sind.

5. Steckverbindung nach Anspruch 4, **dadurch gekennzeichnet, dass** der Dichtungsfuß zumindest einen Fußschenkel (16) aufweist, der vom Verbindungssteg (18), vorzugsweise axial, absteht und sich zu seinem freien Ende hin vom einsteckseitigen Ende (8) des zweiten Steckverbinders (5) entfernt.

6. Steckverbindung nach Anspruch 5, **dadurch gekennzeichnet, dass** der Dichtungsfuß weiters einen zweiten Fußschenkel (17) aufweist, der vom Verbindungssteg (18), vorzugsweise axial, absteht und sich zu seinem freien Ende hin dem einsteckseitigen Ende (8) des zweiten Steckverbinders (5) annähert.

7. Steckverbindung nach einem der Ansprüche 4 bis 6, **dadurch gekennzeichnet, dass** das axiale Spiel des Dichtungsfußes in der Dichtungsnut (10) größer als das axiale Spiel eines die Dichtlippe (14) und die Schmutzlippe (15) umfassenden dynamischen Schenkels der Dichtung (9) ist.

8. Steckverbindung nach einem der Ansprüche 5 bis 7, **dadurch gekennzeichnet, dass** die rechtwinklig zur Längserstreckung (27) der Dichtlippe (14) gemessene Dicke der Dichtlippe (14) im Bereich der Mitte der Längserstreckung der Dichtlippe (14) größer als die rechtwinklig zur Längserstreckung des betreffenden Fußschenkels (16, 17) gemessene Dicke von zumindest einem Fußschenkel (16, 17) des Dichtungsfußes im Bereich der Mitte der Längserstreckung des betreffenden Fußschenkels (16, 17) ist.

9. Steckverbindung nach einem der Ansprüche 5 bis 8, **dadurch gekennzeichnet, dass** die rechtwinklig zur Längserstreckung (26) der Schmutzlippe (15) gemessene Dicke der Schmutzlippe (15) im Bereich der Mitte der Längserstreckung der Schmutzlippe (15) grö-βer als die rechtwinklig zur Längserstreckung des betreffenden Fußschenkels (16, 17) gemessene Dicke von zumindest einem Fußschenkel (16, 17) des Dichtungsfußes im Bereich der Mitte der Längserstreckung des betreffenden Fußschenkels (16, 17) ist.

10. Steckverbindung nach einem der Ansprüche 1 bis 9, **dadurch gekennzeichnet, dass** der zweite Steckverbinder (5) mindestens ein hülsenförmiges Steckerteil (30, 30') umfasst, welches von einem gebogenen Blech gebildet wird, das den Boden (11) und zumindest eine der Seitenwände (12, 13) der Dichtungsnut (10) bildet.
